# EUROPÄISCHE PATENTANMELDUNG

(11) **EP 1 111 357 A1**
(43) Veröffentlichungstag der Anmeldung: **27.06.2001**
(21) Anmeldenummer: 00125026.5
(22) Anmeldetag: 16.11.2000
(51) Int. Cl.: G01K 13/02, A47J 31/54, F24H 9/20

(54) **Haushaltgerät mit einem Temperatursensor**

(30) Priorität: 21.12.1999 DE 19961784
(71) Anmelder: BSH Bosch und Siemens Hausgeräte GmbH, 81669 München (DE)
(72) Erfinder: Sams, Walter, Dipl.Ing. (FH), 93138 Lappersdorf (DE); Lorenz, Tilmann, Dr.rer.nat., 93049 Regensburg (DE)

(57) **Zusammenfassung**

In einem Haushaltgerät, insbesondere in einem wasserführenden Haushaltgerät mit einem Durchlauferhitzer (1) ist ein Rohrheizkörper (5) vorgesehen. Ein Temperatursensor (7), der für Infrarot-Strahlung empfindlich ist, mißt die von dem Rohrheizkörper (5) oder von in einen Innenraum (4) des Durchlauferhitzers (1) eingefülltem Wasser.

## Beschreibung

Die Erfindung bezieht sich auf ein Haushaltgerät mit einem in einem Innenraum des Haushaltgerätes angeordneten Temperatursensor.

Es ist bekannt, in einem Haushaltgerät die Temperatur zu erfassen. Beispielsweise sind Kühlschränke mit einem NTC-Widerstand ausgestattet, um bei Überschreiten einer vorgegebenen Temperatur den Kompressor anzuschalten. Ebenso sind Backmuffeln mit Temperatursensoren ausgestattet, um den Garungsprozeß eines zu garenden Gutes in der Backmuffel entsprechend einem gewünschten Temperaturverlauf anzupassen. Hierzu dient vorzugsweise ein Platin-Temperatursensor, wobei aus der temperaturabhängigen Änderung der Leitfähigkeit auf die in der Backmuffel herrschende Temperatur geschlossen wird. Zusätzlich kann ein Bimetall-Sensor vorhanden sein, der als Übertemperatursicherung dient.

In wasserführenden Haushaltgeräten, beispielsweise in einer Waschmaschine oder in einer Spülmaschine, werden Rohrheizkörper eingesetzt, die mit einer Schmelzsicherung ausgestattet sind, um eine Überhitzung des Rohrheizkörpers zu verhindern. Beispielsweise ist ein Rohrheizkörper aus der DE 32 04 875 C2 bekannt, in dem in das unbeheizte Anschlußende des Rohrheizkörpers ein konzentrisch angeordnetes Anschlußrohr eingesetzt ist, in das eine mit einem elektrisch isolierten Anschlußdraht versehene Schmelzsicherung eingeführt ist. Eine derartige Schmelzsicherung soll ein exaktes Ansprechen auch bei Verkalkung des Rohrheizkörpers noch gewährleisten.

Es ist die Aufgabe der Erfindung, ein Haushaltgerät der eingangs genannten Art derart zu verbessern, daß eine einfache Temperaturmessung möglich ist.

Diese Aufgabe wird bei einem Haushaltgerät der eingangs genannten Art dadurch gelöst, daß der Temperatursensor ein Infrarot-Sensor ist, durch den Infrarot-Strahlung aus dem Innenraum empfangbar ist.

Der besondere Vorteil der Erfindung besteht darin, daß der Infrarot-Sensor sowohl für eine kontinuierliche Temperaturmessung einsetzbar ist als auch als Übertemperatursensor dient.

Vorteilhaft ist der Infrarot-Empfänger als Thermosäule (Thermopile) ausgebildet. Eine derartige Thermosäule hat einen einfachen und kompakten Aufbau, durch die sich die Temperatur mit hoher Genauigkeit messen läßt. Vorzugsweise ist die Thermosäule mit einer ihre Absorptionsschicht überdeckenden Schutzschicht, beispielsweise aus Silicium, ausgestattet, so daß sie gegen Beschädigungen und Verunreinigungen aus dem Innenraum geschützt ist. Die Schutzschicht ist als Schutzfenster ausgebildet.

Ein weiterer Vorteil beim Einsatz eines Infrarot-Empfängers besteht darin, daß er eine kurze Reaktionszeit hat und nur einen geringen konstruktiven Aufwand erfordert.

Vorteilhaft ist der Infrarot-Empfänger mit einer Steuereinrichtung verbunden, durch die Funktionen des Haushaltgerätes ein- oder ausschaltbar sind, wenn die Steuereinrichtung von dem Infrarot-Empfänger Meßsignale über eine erreichte Temperatur oder über das Überschreiten einer Temperatur erhält. Beispielsweise beendet die Steuereinrichtung das Heizprogramm zum Aufheizen einer Waschlauge oder einer Spülflotte in einer Waschmaschine bzw. einer Spülmaschine, wenn sie von dem Infrarot-Empfänger Meßsignale erhält, die einer erreichten Temperatur entsprechen.

Beim Einsatz eines erfindungsgemäßen Temperatursensors in einer Geschirrspülmaschine oder in einer Waschmaschine wird dieser in der Nähe des Heizkörpers angeordnet, so daß er die von dem Heizkörper ausgesandte Infrarot-Strahlung empfängt. Bei Abwesenheit von zu erwärmendem Wasser mißt er die Temperatur des Heizkörpers, so daß sich erfassen läßt, ob die Heizung eingeschaltet ist, ohne daß Wasser vorhanden ist. Dann schaltet die Steuereinrichtung die Heizung aufgrund des von dem Temperatursensor empfangenen Meßsignals ab. In diesem Fall dient der Temperatursensor also als Übertemperatursicherung. Damit ersetzt der Temperatursensor einen Druckschalter, der auf das Vorhandensein von Wasser reagiert, und der die Heizung vor dem Trockenlauf schützen soll. Zusätzlich mißt der Temperatursensor die Temperatur des von dem Heizkörper aufgeheizten Wassers aufgrund der von dem Wasser abgegebenen Wärmestrahlung, wobei eine gewisse Mindestschichtdicke von Wasser, beispielsweise von 0,5 cm, auf der Oberfläche des Temperatursensors notwendig ist. Bei Vorhandensein von Wasser wird die Wärmestrahlung des Heizkörpers nicht mehr gemessen, sondern ausschließlich die des Wassers. Somit nimmt der Temperatursensor eine Doppelfunktion wahr: in Abwesenheit von Wasser mißt er die Wärmestrahlung der Heizung, bei Vorhandensein des Wassers mißt er dessen Wärmestrahlung. Im ersten Fall dient er also als Übertemperaturschutz, im zweiten Fall als Thermometer.

Nachstehend wird die Erfindung in einem Ausführungsbeispiel anhand der Zeichnungen näher erläutert.

Es zeigen:
- Fig. 1: einen mit einem Temperatursensor ausgestatteten Durchlauferhitzer,
- Fig. 2: ein Diagramm für eine Meßspannung U als Funktion der Zeit t,
- Fig. 3: eine Draufsicht auf eine Thermosäule mit einer Mehrzahl von Thermoelementen sowie
- Fig. 4: ein einziges Thermoelement im Querschnitt.

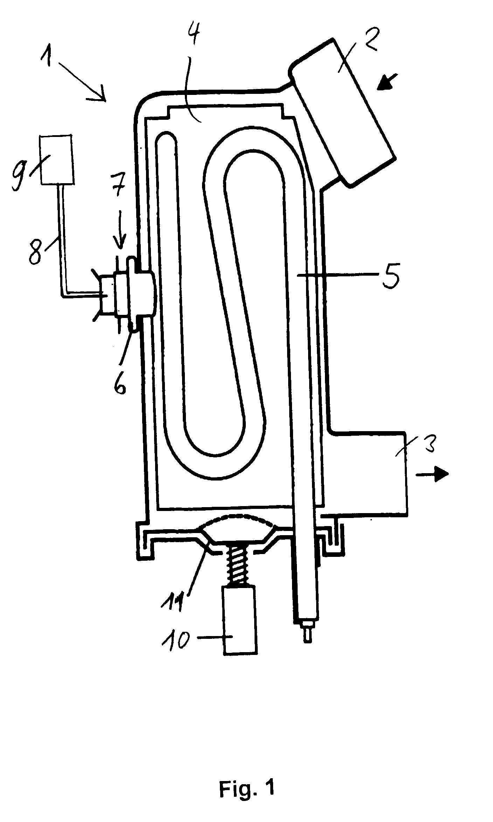

Ein Durchlaufhitzer 1 (Fig. 1), der unterhalb des Bodens eines Spülbehälters in einer Geschirrspülmaschine angeordnet ist, dient zum Erwärmen von Wasser, das in dem Spülbehälter zum Reinigen von Geschirr eingesetzt wird. Er weist einen Zulauf 2 und eine Austrittsöffnung 3 für das Wasser auf. In einem Innenraum 4 ist ein S-förmig gebogener Rohrheizkörper 5 angeordnet, der als Heizelement dient. Ein durch eine Abdeckung 6 gekapselter Temperatursensor 7 ragt in den Innenraum 4 hinein und empfängt Infrarot-Strahlung aus dem Innenraum 4.

Solange noch kein Wasser in dem Innenraum 4 enthalten ist, empfängt er Infrarot-Strahlung von dem benachbarten Rohrheizkörper 5, wobei es unerheblich ist, ob der Rohrheizkörper 5 eine Edelstahl-Ummantelung aufweist oder eine andere Ummantelung oder ob diese infolge von Verkalkung mit einer Kalkschicht bedeckt ist. In jedem Fall wird die Infrarot-Strahlung von dem Temperatursensor 7 empfangen.

Der Temperatursensor 7 ist über Leitungen 8 mit einer Steuereinrichtung 9 verbunden. In ihr werden von dem Temperatursensor 7 erzeugte Meßsignale ausgewertet. Die Steuereinrichtung entscheidet dann, ob, wenn eine vorgegebene Höchsttemperatur überschritten wird, der Rohrheizkörper 5 ausgeschaltet wird. Wenn bei Abwesenheit von Wasser der Temperatursensor 7 die Wärmestrahlung des Rohrheizkörpers 5 empfängt, dient der Temperatursensor 7 als Übertemperaturschutz, indem die Steuereinrichtung 9 aufgrund eines von dem Temperatursensor 7 erzeugten Spannungs-Meßsignals den Rohrheizkörper 5 abschaltet, wenn eine bestimmte, als höchste noch zulässige Temperatur überschritten wird.

Andererseits mißt der Temperatursensor 7, nachdem durch den Zulauf 2 Wasser in den Durchlauferhitzer 1 eingelassen worden ist, die Wärmestrahlung des Wassers. Dabei wird kontinuierlich die Aufheizung des kalten Wassers durch den Rohrheizkörper 5 erfaßt, wobei, sobald eine gewisse Wasserschichtdichte von beispielsweise wenigstens wenigen Millimetern auf der Abdeckung 6 vorhanden ist, der Temperatursensor 7 nicht mehr die Wärmestrahlung des Rohrheizkörpers 5, sondern die des eingefüllten Wassers mißt. Auch in diesem Fall werden die Meßsignale über die Leitungen 8 an die Steuereinrichtung 9 abgegeben, die entsprechend einem eingestellten Spülprogramm den Rohrheizkörper 5 bei Erreichen der gewünschten Temperatur abschaltet.

Somit ist erfindungsgemäß ein zusätzlicher Drucksensor, um festzustellen, ob überhaupt Wasser in dem Innenraum 4 vorhanden ist, nicht mehr erforderlich.

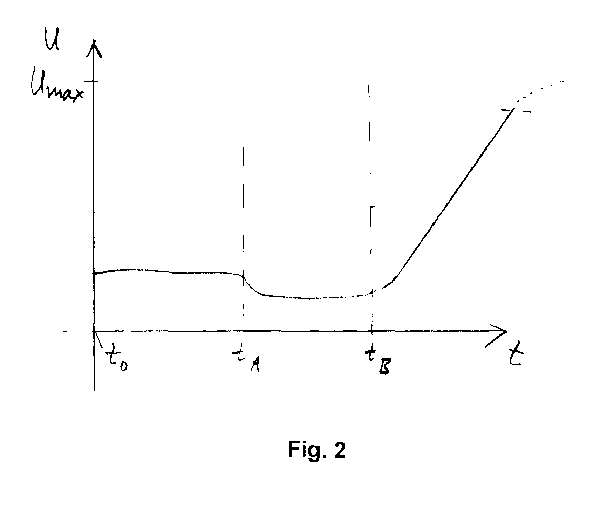

Es ergibt sich beispielsweise vor dem Einlaufen des Wassers, während des Einlaufens des Wassers und nach dem Einlaufen des Wassers während der Heizperiode ein Meßsignal U als von dem Temperatursensor 7 erzeugte Meßspannung als Funktion der Zeit t (Fig. 2): zunächst wird ab einem Zeitpunkt t₀ die Temperatur des Rohrheizkörpers 5 gemessen und erzeugt ein entsprechendes Spannungssignal. Zu einem Zeitpunkt t_{A} wird Wasser in den Innenraum 4 eingelassen, wodurch, wenn das Wasser eine niedrigere Temperatur hat als der Rohrheizkörper 5, die Temperatur abgesenkt wird, so daß auch die gemessene Spannung U sinkt und sich dann während des Einfüllvorgangs auf einen Wert einstellt, der in etwa der Temperatur des eingefüllten Wassers entspricht. Ab einem Zeitpunkt tB beginnt dann der Heizvorgang, wodurch die gemessene Spannung U proportional zur Temperatur ansteigt.

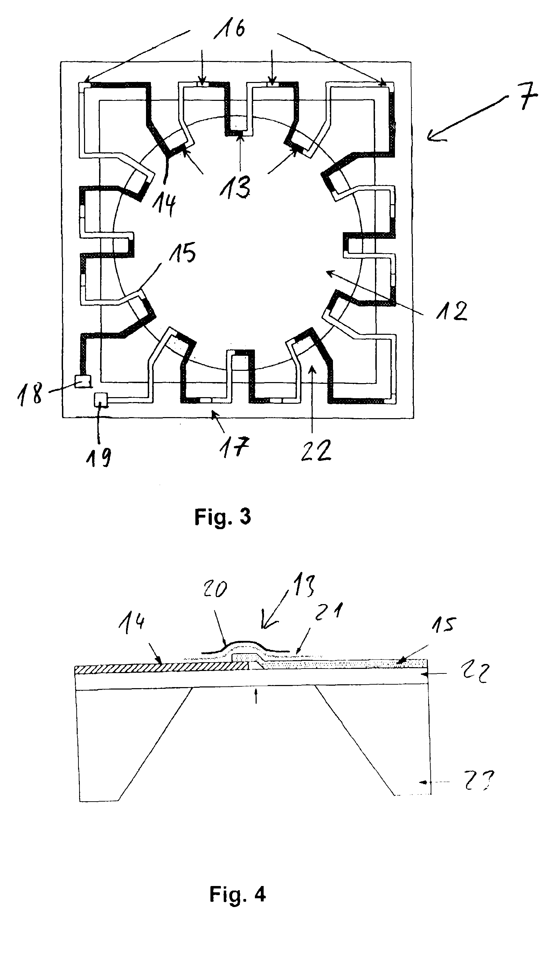

Der Temperatursensor 7 mißt die Wärmestrahlung, d. h. die Infrarot-Strahlung, und ist vorzugsweise ein Strahlungsthermoelement, das einen von der absorbierten Infrarot-Strahlung erzeugten Temperaturanstieg an einer Kontaktstelle zwischen zwei verschiedenen, den Strom leitenden Materialien mißt, wobei der thermoelektrische Effekt ausgenutzt wird. Im Bereich einer Fläche 12 (Fig. 3), die empfindlich ist für Infrarot-Strahlung, wird der Temperaturanstieg an einer Kontaktstelle 13 zwischen zwei verschiedenen, den elektrischen Strom leitenden Materialien **14,** 15 ausgenutzt, die jeweils eine zweite Kontaktstelle 16 im Bereich einer Wärmesenke 17 haben. Durch die Temperaturdifferenz zwischen der ersten Kontaktstelle 13 und der zweiten Kontaktstelle 16 entsteht eine Thermospannung U. Durch die Hintereinanderschaltung einer Vielzahl von jeweils aus den beiden Materialien 14, 15 bestehenden Thermoelementen mit jeweils zwei Kontaktstellen 13, 16 liegt zwischen elektrischen Anschlüssen 18, 19 eine ausreichend hohe Thermospannung an, die über die Leitungen 8 der Steuereinrichtung 9 zugeführt wird.

Im einzelnen sind die Thermoelemente in Bereich der ersten Kontaktstelle 13 aufgebaut, wie in Fig. 4 dargestellt ist. Unterhalb einer Infrarot-Strahlung absorbierenden Schicht 20, wie sie in Fig. 3 durch die Fläche 12 gebildet wird, ist eine Isolationsschicht 21 angeordnet, unter ihr liegt die elektrische Verbindung zwischen dem Material 14, beispielsweise einem Leiter aus Wismut, und dem zweiten Material 15, beispielsweise einem Leiter aus Antimon. Die Materialien 14, 15 sind auf einer Si₃N₄/SiO₂-Membran 22 aufgebracht, die ihrerseits auf einem Silicium-Substrat 23 befestigt ist. Die Membran 22 trennt, wie in Fig. 3 ersichtlich, die ersten Kontaktstellen 13 unterhalb der für die Infrarot-Strahlung empfindlichen Fläche 12 von den zweiten Kontaktstellen 16 auf der Wärmesenke 17.

Der in Fig. 3 dargestellte Temperatursensor 7 läßt sich, mit einer Abdeckung 6 ausgestattet, in dem Durchlauferhitzer 1 gemäß Fig. 1 einsetzen. In Abwesenheit von Wasser mißt er die Temperatur des Rohrheizkörpers 5, indem er dessen Infrarot-Strahlung aufnimmt; wenn Wasser eingefüllt wird, mißt er die Infrarot-Strahlung des Wassers.

## Patentansprüche

1. Haushaltgerät mit einem in einem Innenraum (4) des Haushaltgerätes angeordneten Temperatursensor (7), **dadurch gekennzeichnet,** daß der Temperatursensor ein Infrarot-Sensor (7) ist, durch den Infrarot-Strahlung aus dem Innenraum (4) empfangbar ist.

2. Haushaltgerät nach Anspruch 1, **dadurch gekennzeichnet,** daß der Infrarot-Sensor (7) mit einer Steuereinrichtung (9) verbunden ist, und daß durch die Steuereinrichtung (9) aufgrund von von dem Infrarot-Sensor (7) erzeugten Meßsignalen Funktionen des Haushaltgerätes steuerbar sind.

3. Haushaltgerät nach Anspruch 2, **dadurch gekennzeichnet,** daß der Infrarot-Sensor (7) auf eine Heizung (5) in dem Innenraum (4) gerichtet ist und daß deren Temperatur durch den Infrarot-Sensor (7) meßbar ist.

4. Haushaltgerät nach Anspruch 3, dadurch gekennzeichnet, daß die Heizung (5) aufgrund einer von dem Infrarot-Sensor (7) gemessenen Übertemperatur abschaltbar ist.

5. Haushaltgerät nach Anspruch 1 oder 2, **dadurch gekennzeichnet,** daß der Infrarot-Sensor (7) zur Messung der Temperatur von Wasser in dem Innenraum (4) dient.

6. Haushaltgerät nach einem der Ansprüche 1 bis 5, **dadurch gekennzeichnet,** daß der Infrarot-Sensor (7) mindestens ein Thermoelement aufweist, das aus zwei Materialien (14, 15) besteht, die auf zwei Kontaktstellen (13, 16) aufliegen, von denen eine durch Infrarot-Strahlung erwärmbar ist und die andere als Wärmesenke dient.

7. Haushaltgerät nach einem der Ansprüche 1 bis 6, dadurch gekennzeichnet, daß ein von dem Infrarot-Sensor (7) erzeugtes Meßsignal einer Steuereinrichtung (9) zuführbar ist und daß durch diese aufgrund des Meßsignals die Heizung (5) ein-oder ausschaltbar ist.
